# EUROPÄISCHE PATENTANMELDUNG

(11) **EP 3 501 695 A1**
(43) Veröffentlichungstag der Anmeldung: **26.06.2019**
(21) Anmeldenummer: 17210030.7
(22) Anmeldetag: 22.12.2017
(51) Int. Cl.: B22F 3/105, B33Y 10/00, B33Y 30/00, B29C 64/153, B29C 64/245

(54) **VORRICHTUNG ZUR SCHICHTWEISEN HERSTELLUNG VON DREIDIMENSIONALEN OBJEKTEN SOWIE HERSTELLUNGSVERFAHREN DAZU**

(71) Anmelder: Evonik Degussa GmbH, 45128 Essen (DE)
(72) Erfinder: GREBE, Maik, 44805 Bochum (DE); DIEKMANN, Wolfgang, 45731 Waltrop (DE); HESSEL, Sigrid, 45721 Haltern am See (DE); GRUHN, Maximilian, 45770 Marl (DE)

(57) **Zusammenfassung**

Die vorliegende Erfindung betrifft eine Vorrichtung zur schichtweisen Herstellung von dreidimensionalen Objekten in einem Powder Bed Fusion-Verfahren. Die Vorrichtung (20) umfasst einen Bauraum (1), mindestens eine Energiequelle (5), ein Baufeld (4) mit einer Bauraumplattform (6) und einen die Bauraumplattform (6) seitlich einfassenden Bauraumbehälter (9). Die Bauraumplattform (6) weist eine einem Pulver (2) zugewandte Oberseite (12) und eine dem Pulver abgewandte Unterseite (13) auf. Die Oberseite (12) der Bauraumplattform (6) umfasst einen Werkstoff mit einer Wärmeleitfähigkeit von mindestens 20 W/(m·K) und die Unterseite (13) der Bauraumplattform (6) umfasst einen Werkstoff mit einer Wärmeleitfähigkeit von maximal 0,5 W/(m·K).

## Beschreibung

Die vorliegende Erfindung betrifft eine Vorrichtung zur schichtweisen Herstellung von dreidimensionalen Objekten in einem Powder Bed Fusion-Verfahren sowie ein Powder Bed Fusion-Verfahren.

Die zügige Bereitstellung von Prototypen oder Kleinserien ist eine in der jüngsten Zeit häufig gestellte Aufgabe. Verfahren, die dies ermöglichen, werden Rapid Prototyping, Rapid Manufacturing, Additive Fabrication-Verfahren oder einfach auch 3d printing genannt. Besonders geeignet sind Verfahren, bei denen schichtweise durch selektives Aufschmelzen und/oder Verfestigen von pulverförmigen Werkstoffen die gewünschten Strukturen hergestellt werden. Die nach diesem Prinzip arbeitenden Verfahren werden in der ISO/ASTM 52900 oder der ISO 17296-2 unter dem Oberbegriff Powder Bed Fusion zusammengefasst.

Ein Beispiel für ein Powder Bed Fusion-Verfahren ist das Laser-Sintern, welches ausführlich in der Schriften US 6136948 und WO 96/06881 beschrieben wird. Weitere Beispiele für Powder Bed Fusion-Verfahren sind in den Dokumenten US 6531086 und EP 1740367 (US 2007/238056) beschrieben.

Bei den Powder Bed Fusion-Verfahren werden Pulver aus metallischen, keramischen oder auch polymeren Werkstoffen eingesetzt. Zur Minimierung des Verzugs der herzustellenden dreidimensionalen Objekte ist meist eine Temperierung des Bauraums notwendig. In DE 10108612 (US 2002/158054) ist eine Vorrichtung beschrieben, bei der mittels einer Mantelheizung des Bauraums der Verzug der dreidimensionalen Objekte vermieden werden soll. Die Beheizung des Mantels des Bauraums hat aber den großen Nachteil, dass das Pulver im Bauraumbehälter dann einer längeren Temperaturbelastung ausgesetzt ist. Zudem ist die in dieser Schrift beschriebene einzustellende Temperaturverteilung im Mantel des Bauraums durch separat zu temperierende Bereiche umgesetzt, was eine aufwendige Vorrichtung benötigt. Eine längere Temperaturbelastung führt aber gerade bei polymeren Werkstoffen zu ungewünschten Änderungen im Pulvermaterial wie einer thermo-oxidative Schädigung oder zu einem zu starken Molekulargewichtsaufbau. Beide Effekte sind unerwünscht, da diese die Recyclingfähigkeit des Pulvers negativ beeinflusst.

Die Aufgabe der vorliegenden Erfindung bestand daher darin, den Verzug der hergestellten dreidimensionalen Objekte und gleichzeitig die thermische Belastung des Pulvermaterials möglichst gering zu halten. Das Pulver sollte einen möglichst geringen Molekulargewichtsaufbau erfahren.

Bei Vorrichtungen, die in Powder Bed Fusion-Verfahren eingesetzt werden, wird die Richtung des Baufortschritts (Absenkungsrichtung der Bauraumplattform, auf der das dreidimensionale Objekt gebildet wird) als z-Achse definiert. Die z-Achse steht somit senkrecht auf der Baufeldebene. Ein Problem des Standes der Technik besteht darin, dass die mechanischen Kennwerte in z-Richtung stark abhängig von der Position des Objekts im Baufeld sind. Insbesondere die Reißdehnung ist in den Randbereichen signifikant schlechter als in der Mitte des Baufeldes. Daher ist es eine weitere Aufgabe, die mechanischen Kennwerte der Teile des dreidimensionalen Objekts zu verbessern, die im Randbereich (Außenbereich) des Baufeldes gefertigt werden. Dadurch sollen die mechanischen Kennwerte der dreidimensionalen Objekte unabhängig von der Position im Baufeld auf gleichem Niveau liegen.

Demgemäß wurde eine neue Vorrichtung zur schichtweisen Herstellung von dreidimensionalen Objekten in einem Powder Bed Fusion-Verfahren gefunden. Die Vorrichtung umfasst einen Bauraum, mindestens eine Energiequelle, ein Baufeld mit einer Bauraumplattform und einen die Bauraumplattform seitlich einfassenden Bauraumbehälter. Die Bauraumplattform weist eine einem Pulver zugewandte Oberseite und eine dem Pulver abgewandte Unterseite auf. Die Oberseite der Bauraumplattform umfasst einen Werkstoff mit einer Wärmeleitfähigkeit von mindestens 20 W/(m·K) und die Unterseite der Bauraumplattform umfasst einen Werkstoff mit einer Wärmeleitfähigkeit von maximal 0,5 W/(m·K). Hierdurch wird eine Bauraumplattform bereitgestellt, deren Oberseite einen gut wärmeleitfähigen Werkstoff und deren Unterseite einen schlecht wärmeleitenden Werkstoff umfasst. Vorzugsweise besteht die Oberseite der Bauraumplattform aus einem Werkstoff mit einer Wärmeleitfähigkeit von mindestens 20 W/(m·K) und die Unterseite der Bauraumplattform aus einem Werkstoff mit einer Wärmeleitfähigkeit von maximal 0,5 W/(m·K).

Durch die erfindungsgemäße Vorrichtung umfassend eine zuvor genannte Bauraumplattform werden dreidimensionale Objekte erhalten, die einen geringeren Verzug und gute und gleichmäßige mechanische Kennwerte zeigen. Zudem erfolgt eine geringere thermische Belastung des Pulvers.

Vorzugsweise umfasst die Bauraumplattform Einrichtungen, die eine Kühlung der Oberseite der Plattform ermöglicht. Hierzu können an der Unterseite der Bauplattform eine oder mehrere fremd angetriebene Strömungsmaschinen integriert sein. Zudem oder alternativ kann die Bauraumplattform mindestens einen Einlass für ein Kühlmedium und mindestens einen Auslass für ein Kühlmedium vorweisen. Vorzugsweise sind Einlass und Auslass jeweils auf der Unterseite der Plattform angeordnet.

In einer bevorzugten Ausführungsform der Erfindung weist der Bauraumbehälter eine der Bauraumplattform zugewandte Mantelfläche auf, wobei die Mantelfläche einen Werkstoff mit einer Wärmeleitfähigkeit von maximal 0,5 W/(m·K) umfasst oder bevorzugt aus diesem besteht. Vorzugsweise hat die Mantelfläche eine Wandstärke von mindestens 10 mm. Bevorzugt beträgt die Wandstärke mindestens 40 mm, besonders bevorzugt mindestens 80 mm.

Mit der Ausführung der Mantelfläche des Bauraumbehälters als Wärmeisolator kann auf die aufwendige Temperierung des Bauraumbehälters verzichtet werden und zudem die thermische Belastung des Pulvers verringert und der Verzug der hergestellten dreidimensionalen Objekte weiter reduziert werden.

Der Werkstoff der Mantelfläche des Bauraumbehälters und der Werkstoff der Unterseite der Bauraumplattform kann gleich oder verschieden sein. Bevorzugt hat der Werkstoff jeweils eine Wärmeleitfähigkeit von weniger als 0,3 W/(m·K), besonders bevorzugt jeweils weniger als 0,1 W/(m·K) und ganz besonders bevorzugt jeweils weniger als 0,05 W/(m·K). Der Werkstoff der Oberseite weist vorzugsweise eine Wärmeleitfähigkeit von mindestens 80 W/(m·K), bevorzugt von mindestens 140 W/(m·K) auf.

Die Wärmeleitfähigkeit wird bei 23 °C nach ASTM E1461 (LFA457 Micro Flash der Firma Netzsch, Probendicke 2 mm, Probenkonditionierung 48 h 23 °C/50 %) ermittelt. Geeignete Materialien, die diese wärmeisolierenden Eigenschaften zeigen, sind beispielsweise Schaumglas, Schaumkeramik, Blähperlit, Porenbeton, Holz, Hochtemperaturpolymere wie Polyetheretherketone oder temperaturbeständige Duromere.

Die Bauraumplattform kann derart gestaltet werden, dass eine Kühlung des bereitgestellten Pulvers (Pulverkuchen) während des Bauprozesses oder nach dem Bauprozess möglich ist. Die Kühlung der Bauraumplattform erfolgt dabei vorzugsweise durch Wärmeleitung und/oder Konvektion. Die Kühlleistung kann mittels Regelung auf den gewünschten Wert geregelt werden.

Die erfindungsgemäße Vorrichtung wird im Folgenden anhand der Figuren erläutert.

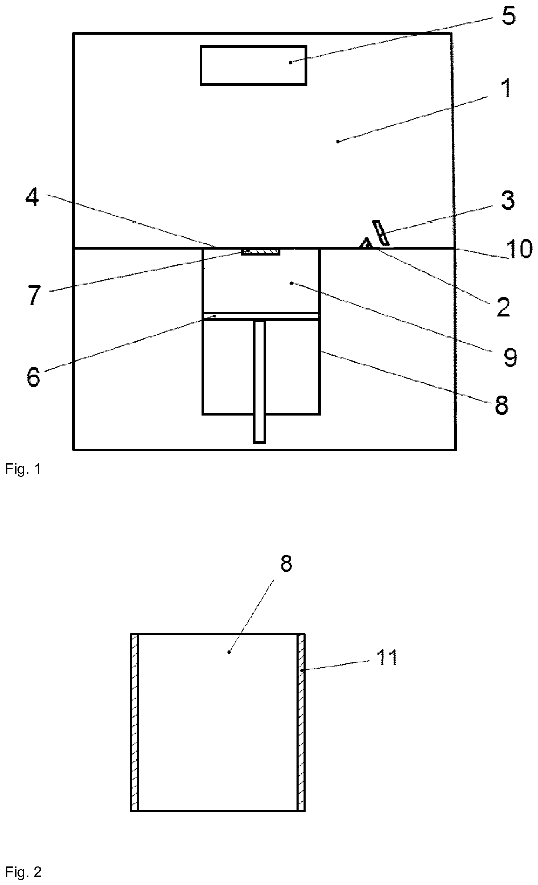

Fig. 1 zeigt den prinzipiellen Aufbau einer Vorrichtung zur Herstellung von dreidimensionalen Objekten gemäß dem Stand der Technik (Vorderansicht) in einem Powder Bed Fusion-Verfahren. Der Bauraum (1) umfasst den gesamten Bereich, in dem die dreidimensionalen Objekte hergestellt werden. Eine geeignete Schiebevorrichtung (3) wie Roller, Zylinder oder Rakel trägt das Pulver (2) über die Baufeldebene (10) auf das Baufeld (4) auf. Das Pulver wird mittels einer Wärmequelle temperiert. Eine elektromagnetische Energiequelle (5) wie z.B. ein Laser schmilzt oder sintert selektiv einen Bereich auf der Baufeldoberfläche. Die Bauraumplattform (6) wird entsprechend einer vorgegebenen Schichtstärke abgesenkt und der Vorgang solange wiederholt, bis schichtweise ein dreidimensionales Objekt (7) entsteht. Der Bauraumbehälter (8) umschließt dabei den Pulverkuchen (9) und die darin ggfs. enthaltenen hergestellten dreidimensionalen Objekte (7). Der Pulverkuchen wird seitlich begrenzt durch die Mantelfläche des Bauraumbehälters, oben begrenzt durch das Baufeld und unten begrenzt durch die Bauraumplattform. Die Mantelfläche des Bauraumbehälters wird nach dem Stand der Technik beheizt.
Fig. 2 zeigt beispielhaft die erfindungsgemäße Gestaltung des Bauraumbehälters (8) (Vorderansicht, im Schnitt). Die Mantelfläche des Bauraumbehälters (11) besteht vorzugsweise aus einem wärmeisolierenden Material mit einer Wandstärke von mindestens 10 mm.

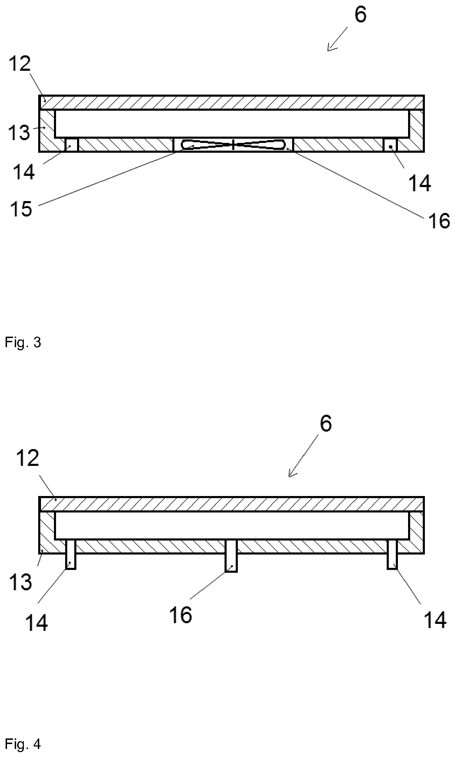

In Fig. 3 ist beispielhaft eine erfindungsgemäße Ausführungsform der Bauraumplattform (6) dargestellt. Die Bauraumplattform (6) umfasst eine Ober- (12) und einer Unterseite (13). Eine fremd angetriebene Strömungsmaschine (15) mit regelbarer Drehzahl ist an der Unterseite (13) der Plattform montiert. Zur besseren Durchströmung besitzt die Unterseite (13) neben einem Einlass (16) für die Luft auch einen oder mehrere Auslässe (14). Die Oberseite (12) besteht bevorzugt aus einem Material mit guter Wärmeleitfähigkeit (d.h. einer Wärmeleitfähigkeit von mindestens 20 W/(m·K)) und die Unterseite (13) besteht bevorzugt aus einem Material mit schlechter Wärmeleitfähigkeit (d.h. einer Wärmeleitfähigkeit von maximal 0,5 W/(m·K)).

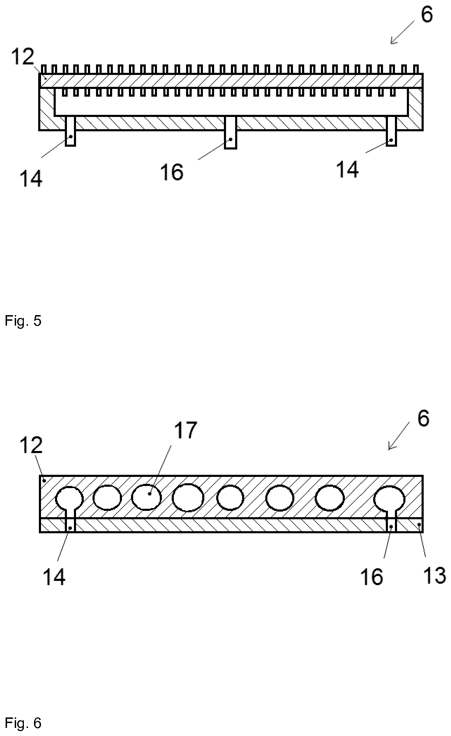

Eine weitere erfindungsgemäße Ausführung ist in Fig. 4 dargestellt. Die Bauraumplattform (6) ist derart gestaltet, dass ein Kühlmedium hindurchströmen kann. Die Unterseite (13) hat dabei einen Zufluss (16) und einen oder mehrere Abflüsse (14) für das Kühlmedium. Das Kühlmedium kann gasförmig oder flüssig sein. Auch hier besteht die Oberseite (12) bevorzugt aus einem Material mit guter Wärmeleitfähigkeit und die Unterseite (13) besteht bevorzugt aus einem Material mit schlechter Wärmeleitfähigkeit. Eine weitere Ausführungsform ist in Fig. 6 dargestellt, dort ist die Oberseite (12) mit Kühlkanälen (17) durchzogen.

In Fig. 5 ist eine weitere erfindungsgemäße Ausführungsform dargestellt. Ein verbesserter Wärmeübergang von der Oberseite der Bauraumplattform (12) zum Pulverkuchen und zum Kühlmedium wird durch eine Vergrößerung der Kontaktflächen erreicht. Die Kontaktfläche von der Oberseite (12) der Bauraumplattform (6) zum Pulverkuchen und/oder zum Kühlmedium wird dabei vorzugsweise um mindestens 20 % im Vergleich zu einer ebenen Fläche erhöht. Bevorzugt wird die Kontaktfläche von der Oberseite der Bauraumplattform zum Pulverkuchen und/oder zum Kühlmedium um mindestens 50 % im Vergleich zu einer ebenen Fläche einer Plattform erhöht.

Ebenfalls Gegenstand der vorliegenden Erfindung ist ein Verfahren zur schichtweisen Herstellung von dreidimensionalen Objekten in einem Powder Bed Fusion-Verfahren. Das Verfahren umfasst die wiederkehrenden Schritte a) Bereitstellung eines Pulvers (2), b) Einstellen einer Temperatur der Oberseite (12) der Bauraumplattform (6) auf höchstens 15 °C unterhalb einer Prozesstemperatur, c) Einstellen einer Temperatur im Bauraum (1) unterhalb der Schmelztemperatur des Pulvers (Prozesstemperatur), d) Gegebenenfalls Aufbringen eines Schmelzhilfsmittels mittels Inkjet auf zu sinternde Stellen des Pulvers (2), e) Beaufschlagung elektromagnetischer Energie auf das Pulver zur selektiven Sinterung mittels Energiequelle (5), f) Absenken der Bauplattform um eine Schichtstärke g) Aufbringen weiteren Pulvers (2) und h) Wiederholen der Schritte c bis g bis zur Fertigstellung des dreidimensionalen Objekts. Bei der ersten Bereitstellung eines Pulvers ist es bevorzugt, eine Pulver-Schichtdicke von 4 bis 10 mm bereitzustellen.

Die Prozesstemperatur ist die Temperatur des Pulvers im Baufeld. Die Prozesstemperatur liegt vorzugsweise 10 bis 20 °C unterhalb des Schmelzpunkts des Polymerpulvers.

Das Verfahren kennzeichnet sich dadurch aus, dass nach Beginn des Herstellverfahrens die Temperatur der Oberseite (12) der Bauraumplattform (6) um mindestens 5 °C pro 10 mm Baufortschritt gesenkt wird, bis die Oberseite (12) der Bauraumplattform (6) eine Temperatur von maximal 50 °C erreicht hat. Hierbei wird die Temperatur der Bauraumplattform schon während des Bauprozesses abgesenkt. Nach dem Beginn des Bauprozesses wird die Temperatur der Oberseite (12) der Bauraumplattform (6) vorzugsweise um mindestens 7 °C pro 10 mm, besonders bevorzugt 10 °C pro 10 mm Baufortschritt, gesenkt, bis die Oberseite (12) der Bauraumplattform (6) eine Temperatur von höchstens 50 °C erreicht. Als Baufortschritt soll hier die schichtweise Absenkung der Bauplattform während des Bauprozesses gelten. Die Absenkung der Temperatur der Oberseite der Bauraumplattform kann dabei linear oder bevorzugt überproportional mit fortgeschrittenem Bauprozess erfolgen. Letztgenannter Fall führt dazu, dass die Temperatur der Oberseite (12) der Bauraumplattform (6) mit zunehmender Dauer des Bauprozesses schneller abgesenkt wird.

### Bezugszeichenliste

- 1: Bauraum
- 2: Pulver
- 3: Schiebevorrichtung
- 4: Baufeld
- 5: Energiequelle
- 6: Bauraumplattform
- 7: Dreidimensionales Objekt
- 8: Bauraumbehälter
- 9: Pulverkuchen
- 10: Baufeldebene
- 11: Mantelfläche des Bauraumbehälters
- 12: Oberseite der Bauraumplattform
- 13: Unterseite der Bauraumplattform
- 14: Auslass für Kühlmedium
- 15: Fremd angetriebene Strömungsmaschine
- 16: Einlass für Kühlmedium
- 17: Kühlkanäle

### Beispiele

Die in den Beispielen beschriebenen Vorrichtungen wurden genutzt, um dreidimensionale Objekte zu erstellen. Für die Herstellung der dreidimensionalen Objekte wurde ein PA12 Pulver mit den in der Tabelle 1 aufgeführten Eigenschaften genutzt. Dazu wurde in allen Beispielen auf der Bauraumplattform eine Pulverschicht von 6 mm gelegt und der gesamte Bauraum 180 Minuten auf eine Temperatur von 168 °C vorgeheizt. Der Bauprozess wurde gestartet (Prozesstemperatur 174 °C, Schichtstärke 0,15 mm) und es wurden insgesamt 36 Zugprüfkörper (DIN ISO527, Belichtungsparametersatz speed, Position und Ausrichtung der Objekte in allen Beispielen gleich) gebaut. Jeweils 12 Zugstäbe in z-Ausrichtung (senkrecht) wurden am Rand und in der Mitte des Baufeldes positioniert. Die restlichen 12 Zugprüfkörper wurden in x-Ausrichtung (waagerecht) im Baufeld positioniert. Die Höhe des Pulverbetts betrug am Ende des Bauprozesses jeweils 320 mm. Die Dauer des Bauprozesses betrug bei den Beispielen 18 h 57 min. Nach Ende des Bauprozesses wurde die Heizung abgestellt und der Bauraumbehälter mit den darin enthaltenem Pulver 72 h in der Lasersinter-Maschine gelagert. Danach wurden die erstellten dreidimensionalen Objekte aus dem Pulverbett entnommen und geprüft. Das Pulver wurde ebenfalls aus dem Bauraumbehälter entnommen und mittels eines Mischers homogenisiert. Anschließend wurde die Lösungsviskosität (ISO 307, Schott AVS Pro, Lösemittel m-Kresol sauer, Volumetrisches Verfahren, Doppelbestimmung, Lösetemperatur 100 °C, Lösezeit 2 h, Polymerkonzentration 5 g/l Messtemperatur 25 °C) des so homogenisierten Pulvers gemessen.

**Tabelle 1: Pulverkennwerte**

| | **Wert** | **Einheit** | **Prüfart/Prüfgerät/Prüfparameter** |
|---|---|---|---|
| Polymer | Polyamid 12 | | |
| Schüttdichte | 0,450 | g/cm³ | DIN EN ISO 60 |
| Korngröße d50 | 57 | µm | Malvern Mastersizer 2000, Trockenmessung, 20-40 g Pulver mittels Scirocco Trockendispergiergerät zudosiert. Zuführrate Rüttelrinne 70 %, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 36 | µm | Malvern Mastersizer 2000, Parameter siehe Korngröße d50 |
| Korngröße d90 | 82 | µm | Malvern Mastersizer 2000, Parameter siehe Korngröße d50 |
| <10,48µm | 1,4 | % | Malvern Mastersizer 2000, Parameter siehe Korngröße d50 |
| Fließfähigkeit | 28 | s | DIN EN ISO 6186, Verfahren A, Durchmesser Düsenauslauf 15mm |
| Lösungsviskosität | 1,58 | - | ISO 307, Schott AVS Pro, Lösemittel *m*-Kresol sauer, volumetrisches Verfahren, Doppelbestimmung, Lösetemperatur 100 °C, Lösezeit 2 h, Polymerkonzentration 5 g/l Messtemperatur 25 °C |
| BET (spez. Oberfläche) | 6,7 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23 °C + 16 h bei 80 °C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 142 | °C | DIN 53765 DSC 7 v. Perkin Elmer Heiz-/Kühlrate 20K/min |
| Materialkonditionierung | Material wird vor Verarbeitung/Analyse 24 h bei 23 °C und 50 % Luftfeuchtigkeit gelagert | | |

### Beispiel 1: SLS-Maschine (nicht erfindungsgemäß)

Ein PA12 Pulver mit den Materialkennwerten aus Tabelle 1 wurde auf einer EOSINT P395 Lasersinter-Maschine der Firma eos GmbH verarbeitet. Die Entnahmekammertemperatur wurde auf 130 °C eingestellt.

### Beispiel 2: SLS-Maschine (erfindungsgemäß)

Ein PA12 Pulver mit den Materialkennwerten aus Tabelle 1 wird auf einer EOSINT P395 Lasersinter-Maschine der Firma eos GmbH verarbeitet. Die Heizung der Entnahmekammer wurde ausgeschaltet. Die Mantelfläche des Bauraumbehälters bestand aus Schaumglas mit einer Wandstärke von 40mm.

Die Bauraumplattform war entsprechend Fig. 4 ausgeführt. Die Oberseite der Bauraumplattform bestand aus Aluminium und die Unterseite aus Schaumglas. Die Oberseite wurde mit Druckluft angeströmt, wobei die Luftmenge entsprechend der notwendigen Kühlleistung geregelt wurde. Die Bauraumplattform wurde zu Beginn des Bauprozesses auf 161 °C temperiert. Nach dem Beginn des Bauprozesses wurde die Temperatur der Oberseite der Bauraumplattform um mindestens 7 °C pro 10 mm Baufortschritt gesenkt, bis die Oberseite der Bauraumplattform eine Temperatur von 49 °C erreichte.

In der Tabellen 2 bis 4 sind die Prüfergebnisse der jeweils erstellten Bauteile und die Lösungsviskosität des homogenisierten Pulvers aufgeführt. Es ist zu erkennen, dass die dreidimensionalen Objekte ähnliche Eigenschaften besitzen, aber in dem erfindungsgemäßen Beispiel das homogenisierte Pulver aus dem Bauraumbehälter einen deutlich geringeren Molekulargewichtsaufbau erfahren hat. Zudem ist die Standardabweichung der mechanischen Kennwerte der Bauteile in z-Ausrichtung im erfindungsgemäßen Beispiel 2 deutlich geringer, was eine gleichmäßigere Bauteilqualität bedeutet.

**Tabelle 2: Eigenschaften der Zugprüfkörper in x-Ausrichtung**

| | **Beispiel 1** | **Beispiel 2** |
|---|---|---|
| E-Modul (MPa) | 1753 | 1764 |
| Zugfestigkeit (MPa) | 44 | 45 |
| Reißdehnung (%) | 14 | 12 |
| Verzug | gering | gering |

**Tabelle 3: Eigenschaften der Zugprüfkörper in z-Ausrichtung**

| | **Beispiel 1** | **Beispiel 2** |
|---|---|---|
| | **Durchschnitt/Standardabweichung** | **Durchschnitt/Standardabweichung** |
| E-Modul (MPa) | 1804/40 | 1805/30 |
| Zugfestigkeit (MPa) | 47,3/2,2 | 47,9/0,9 |
| Reißdehnung (%) | 7,3/3,8 | 6,5/1,4 |
| Verzug | gering | gering |

**Tabelle 4: Eigenschaften der Pulver**

| | | |
|---|---|---|
| Lösungsviskosität homogenisiertes Pulver | 2,17 | 2,03 |

## Patentansprüche

1. Vorrichtung zur schichtweisen Herstellung von dreidimensionalen Objekten in einem Powder Bed Fusion-Verfahren, umfassend einen Bauraum (1), mindestens eine Energiequelle (5), ein Baufeld (4) mit einer Bauraumplattform (6) und einen die Bauraumplattform (6) seitlich einfassenden Bauraumbehälter (9), wobei die Bauraumplattform (6) eine einem Pulver (2) zugewandte Oberseite (12) und eine dem Pulver abgewandte Unterseite (13) aufweist, **dadurch gekennzeichnet, dass** die Oberseite (12) einen Werkstoff mit einer Wärmeleitfähigkeit von mindestens 20 W/(m·K) und die Unterseite (13) einen Werkstoff mit einer Wärmeleitfähigkeit von maximal 0,5 W/(m·K) umfasst.

2. Vorrichtung gemäß Anspruch 1, **dadurch gekennzeichnet, dass** an der Unterseite (13) eine oder mehrere fremd angetriebenen Strömungsmaschinen (15) integriert sind.

3. Vorrichtung gemäß einem der vorherigen Ansprüche, **dadurch gekennzeichnet, dass** die Bauraumplattform (6) mindestens einen Einlass (16) und mindestens einen Auslass (14) für ein Kühlmedium vorweist.

4. Vorrichtung gemäß Anspruch 3, **dadurch gekennzeichnet, dass** der mindestens eine Einlass (16) und der mindestens eine Auslass (14) jeweils auf der Unterseite (13) der Bauraumplattform (6) angeordnet sind.

5. Vorrichtung gemäß einem der vorherigen Ansprüche, **dadurch gekennzeichnet, dass** die Kontaktfläche von der Oberseite (12) der Bauraumplattform (6) zum Pulver (2) oder zum Kühlmedium um mindestens 20% erhöht ist im Vergleich zu der ebenen Fläche einer Bauraumplattform (6).

6. Vorrichtung gemäß einem der vorherigen Ansprüche, **dadurch gekennzeichnet, dass** der Bauraumbehälter (9) eine Mantelfläche (11) aufweist, wobei die Mantelfläche (11) einen Werkstoff mit einer Wärmeleitfähigkeit von maximal 0,5 W/(m·K) umfasst.

7. Vorrichtung gemäß Anspruch 6, **dadurch gekennzeichnet, dass** die Mantelfläche (11) des Bauraumbehälters (9) eine Schichtdicke von mindestens 10 mm aufweist.

8. Verfahren zur schichtweisen Herstellung von dreidimensionalen Objekten in einem Powder Bed Fusion-Verfahren in einer Vorrichtung gemäß einem der vorherigen Ansprüche, umfassend die Schritte
a. Bereitstellung eines Pulvers (2) in einer Schichtdicke von mindestens 6 mm,
b. Einstellen einer Temperatur der Oberseite (12) der Bauraumplattform (6) auf höchstens 15 °C unterhalb einer Prozesstemperatur,
c. Einstellen einer Temperatur im Bauraum (1) unterhalb einer Schmelztemperatur des Pulvers (Prozesstemperatur),
d. Aufbringen eines Schmelzhilfsmittels mittels Inkjet auf zu sinternde Stellen des Pulvers (2),
e. Beaufschlagung elektromagnetischer Energie auf das Pulver zur selektiven Sinterung mittels Energiequelle (5),
f. Aufbringen weiteren Pulvers (2),
g. Wiederholen der Schritte d bis f,
**dadurch gekennzeichnet, dass** nach Beginn des Herstellverfahrens die Temperatur der Oberseite (12) der Bauraumplattform (6) um mindestens 5 °C pro 10 mm Baufortschritt gesenkt wird, bis die Oberseite (12) der Bauraumplattform (6) eine Temperatur von maximal 50 °C erreicht hat.

9. Powder Bed Fusion-Verfahren gemäß Anspruch 8, **dadurch gekennzeichnet, dass** die Absenkung der Temperatur der Oberseite (12) der Bauraumplattform (6) überproportional mit fortschreitendem Verfahren erfolgt.
